# EUROPEAN PATENT APPLICATION

(11) **EP 4 303 791 A1**
(43) Date of publication of application: **10.01.2024**
(21) Application number: 22382809.6
(22) Date of filing: 30.08.2022
(51) Int. Cl.: G06Q 10/06

(54) **METHOD FOR ESTABLISHING AN ENVIRONMENTAL CERTIFICATION VALUE OF AN ENERGY GENERATION FACILITY**

(30) Priority: 06.07.2022 EP 22382647
(71) Applicant: Enviroscale S.L., 30500 Molina de Segura (Murcia) (ES)
(72) Inventor: Morales Torres, Raúl, 30507 La Alcayna (ES)
(74) Representative: Isern Patentes y Marcas S.L.

(57) **Abstract**

The present invention relates to a method for establishing a sustainability certification value for a power generation facility, with sustainability being understood to mean the fulfillment of environmental, social, and corporate governance commitment indicators, and more specifically to a method implemented by a computing system which allows calculating an ESG certification value based on a weighted sum of key performance indicators, KPIs, associated with the fulfillment of environmental, social, and corporate governance, ESG, goals by the power generation facility.

## Description

### Technical field of the invention

The present invention relates to a method for establishing a sustainability certification value for a power generation facility, with sustainability being understood to mean the fulfillment of environmental, social, and corporate governance commitment indicators, and more specifically to a method implemented by a computing system which allows calculating an ESG certification value based on a weighted sum of key performance indicators, KPIs, associated with the fulfillment of environmental, social, and corporate governance, ESG, goals by the power generation facility.

### Background of the invention

Today, there is a significant global awareness by all social groups of environmental, social, and corporate governance sustainability issues, which translate into consumers' concern regarding the origin of the energy they consume, where consumers are leaning increasingly more towards renewable and sustainable energies, in addition to an increased readiness to consume ethical and responsible products. In this sense, consumers are not content with the simple affirmation that the energy production process is sustainable, and demand verifiable data which can verify that all the stages of the process are ethical and environmentally friendly, from the construction of the production plant to the generation and distribution of energy.

One of the most exhaustive strategies to evaluate the degree by which an organization tries to achieve social goals which go beyond the role of a company to maximize its profits is represented by the environmental, social, and corporate governance, ESG, commitment criteria. These criteria take into account environmental, social, and ethical aspects, such as the respect for human rights in all the stages of the activity, the sustainability of raw material exploitation, the environmental impact, or the effect on the local economy.

However, despite the considerable effort and the necessary investments to produce renewable and sustainable energy according to the ESG criteria, energy producers fail to stand out from conventional energy producers, risking the loss of their competitive advantage. Today, only the renewable origin of the generated energy is measured, not its sustainability, contributing more often than not to a conception error.

Furthermore, ESG business community has yet to adopt a single standard, making it difficult to compare the different ESG methodologies; meanwhile, agencies for rating the ESG criteria do not disclose their methodologies, using "black box"-type processes to calculate the scoring, or the certification value, a practice which limits both companies which seek to improve their scoring and investors which seek for the information to be more transparent.

Proving that the energy produced is generated in a sustainable manner and that the ESG criteria are complied with in the entire energy supply chain therefore constitutes a technically complex challenge which remains unresolved to date and would allow creating value for all energy market participants by means of differentiating those companies which comply with the ESG criteria, which would be applicable not only to companies which are committed to renewable energy technologies, but also to all other companies.

To that end, it is apparent that there is a demand for a method which allows obtaining an energy certification value based on the ESG criteria, which is verifiable and applicable to the entire energy production chain. Furthermore, there is a need for producers, marketers, and consumers of a method which allows decommoditizing energy and differentiating renewable energy from energy which is renewable as well as sustainable based on the ESG criteria.

### Description of the invention

The present invention proposes a solution to the preceding problems by means of a method implemented by a computing system for establishing a sustainability certification value for a power generation facility and a computing system for implementing said method as described below.

In one inventive aspect, the invention provides a *method implemented by a computing system for establishing an ESG certification value of a power generation facility, wherein the ESG certification value is based on key performance indicators, KPIs, associated with the fulfillment of environmental, social, and corporate governance, ESG, commitment goals by the power generation facility; wherein the computing system is in communication with a computer network comprising a blockchain; and wherein the method comprises, by the computing system, the steps of:*
*receiving key performance indicators of the power generation facility,*
*calculating the ESG certification value based on a weighted sum of key performance indicators,*
*adding the ESG certification value to a blockchain of the computer network.*

Throughout the present document, it will be understood that the computing system can be both a conventional computer and an industrial computer or another type of electronic logic device with connection to a data communication network such as, the Internet, for example; in one example, the computing system can be a system with one or more computers interconnected with one another, preferably by means of a data communication network; in another example, the computing system is an industrial computer integrated in the power generation facility. The computing system is configured for executing a computer program which, as the result of the execution thereof, reproduces the method object of the invention; furthermore, the computing system preferably comprises data storage means, data transmission means, data input means, and information display means.

Power generation facility, generation facility, or simply facility, should be understood to mean any system or combination of physical systems intended for electric energy generation, transformation, and/or distribution such as, for example, thermoelectric stations, hydroelectric stations, wind power stations, or photovoltaic plants. It must be understood that the power generation facility is operatively connected to an electric energy distribution network, for example through one or more stations or substations.

It will also be understood that the computer network is a set of computers interconnected with one another, preferably by means of a data communication network such as, the Internet, for example, wherein each node of the computer network is configured for storing a copy or part of a copy of the blockchain, which will be referred to herein as "comprising a blockchain". The blockchain is configured for recording, in an immutable and tamper-proof manner, a series of transactions which, in the present invention, correspond to the assignment of the ESG certification value to the energy generated by the power generation facility. In one embodiment, the computing system is a node of the computer network on which the blockchain is implemented; in another embodiment, the computing system is in data communication with the computer network through the Internet.

Preferably, the ESG certification value of the power generation facility is implemented as a data file containing a numerical datum, for example, a real number between 0 and 1000, wherein the computing system calculates the value based on a weighted sum of key performance indicators or KPIs. Each key performance indicator is based on the fulfillment of one or more environmental, social, and corporate governance (ESG) commitment criteria by the power generation facility; examples of key performance indicators for a power generation facility are the content in grams of fluorinated elements in the photovoltaic panels of the facility, the percentage of recycled steel used in the construction of the facility, the percentage of recycled aluminum used in the construction, the amount of CO₂ in kilograms emitted by the transport of materials for the construction and maintenance of the facility, or the consumption in liters of water used for cleaning solar panels. Each key performance indicator is multiplied by a weighing factor, and is added up to obtain the ESG certification value.

Also preferably, the computing system calculates the certification value based on information received through any of the data input means, or based on data previously stored in the computing system. The key performance indicators can be calculated by the computing system based on data input, received, and/or stored in the memory of the computing system, or can be input or received as a data file by the data input means. The ESG certification value of the power generation facility may vary over time, depending on possible changes in the operating conditions of the facility or on long-lasting modifications therein. Advantageously, the present invention provides immutability, time traceability, and assurances as a result of the blockchain technology.

In a particular embodiment, *the key performance indicators of the power generation facility are based on one or more of the following factors: content of fluorinated elements in solar panels, percentage of recycled steel used in construction, percentage of recycled aluminum used in construction, CO₂ emissions generated by material transport, consumption of water used for cleaning solar panels, percentage of the surface of the power generation facility which has been reforested, percentage of energy originating from renewable sources consumed in the power generation facility, percentage of recovered waste.* Advantageously, the preceding indicators allow establishing the degree of fulfillment of the environmental, social, and corporate governance, ESG, commitment goals by the power generation facility based on readily measurable and computable criteria.

In a particular embodiment, *the step of calculating the ESG certification value comprises applying a weighing function for the amount of power generated by the power generation facility within a time interval.* Advantageously, weighing based on the amount of energy generated allows incentivizing energy generation facilities which produce a larger volume of energy through sustainable means.

In a particular embodiment, *the time interval is one hour.* Advantageously, establishing ESG certification value weighing in one-hour intervals allows achieving significant granularity; granularity allows companies to adapt their consumption to the time frames in which the energy is 100% renewable, something which is impossible at present with the current Guarantee of Origin certification system. In another particular embodiment, *the time interval are fifteen minutes.* Advantageously, establishing the energy traceability certification value in quarter-hour intervals allows achieving even better granularity.

In a particular embodiment, *the power generation facility is a photovoltaic plant.* Energy generation facilities for generating energy by renewable means, particularly photovoltaic facilities, are those currently having a higher energy demand, and ESG certification allows highlighting its sustainability in a transparent and verifiable manner. In another embodiment, *the power generation facility is a hydroelectric power station, a wind farm, a geothermal power station, or a solar thermal energy station.*

In a particular embodiment, *the step of receiving key performance indicators further comprises receiving data relating to the design of the power generation facility.* Advantageously, data relating to design can be used for calculating weighing factors, and/or for calculating the key performance indicators themselves, as well as for knowing beforehand the sustainability scoring the plant will have once constructed.

In a particular embodiment, *the computing system receives information relating to the key performance indicators and*/*or data relating to the design of the power generation facility from one or a combination of*: a *user terminal, a server, one or more sensors of the power generation facility.* Advantageously, the computing system can be located in a location away from the generation facility, or alternatively can be integrated in the power generation facility itself.

In a second inventive aspect, the invention provides a *computing system configured for executing the method according to the first inventive aspect.*

These and other features and advantages of the invention will become apparent from the description of the preferred, but not exclusive, embodiments which are illustrated by way of non-limiting example in the accompanying drawings.

### Brief description of the drawings

- Figure 1: This Figure shows a flow chart corresponding to a preferred embodiment of the method of the present invention.
- Figure 2: This Figure shows a preferred embodiment of the computing system of the present invention in connection with other elements.

### Detailed description of an exemplary embodiment

The following detailed description provides numerous specific details as examples to provide a thorough understanding of the relevant teachings. However, it will be apparent to those skilled in the art that the present teachings can be implemented without such details.

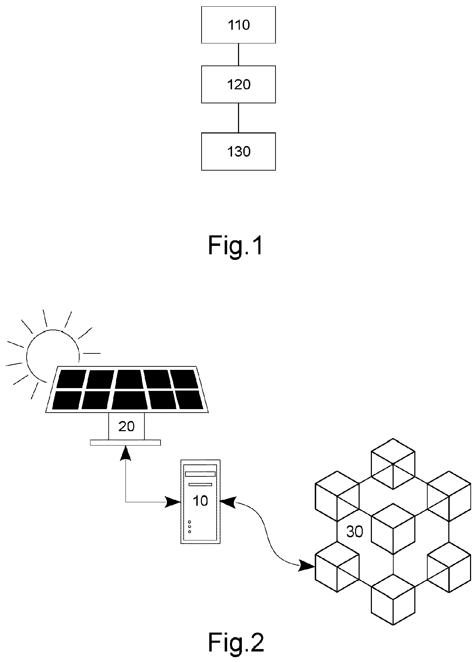

Figure 1 shows a preferred exemplary embodiment of the method of the present invention; in this example, the power generation facility (20) is a photovoltaic plant operatively connected with the computing system (10) which, in the example, is a conventional computer with Internet connection.

In the example, the computing system (10) receives (110) a set of key performance indicators, KPIs, including factors such as the content of fluorinated elements in solar panels, the percentage of recycled steel used in construction, and CO₂ emissions generated by material transport; in this example, the computing system (10) receives the KPIs through a data network.

Next, the computing system (10) calculates (120) the ESG certification value by multiplying each KPI by a pre-established weighing factor which is stored in the memory of the computing system (10), and adds up the values to obtain an integer between 0 and 1000, and which is stored in a non-volatile memory of the computing system (10). In another example not shown in the figures, the ESG certification value is furthermore calculated by applying to the preceding value a weighing function which depends on the amount of power generated by the power generation facility (20) within a time interval which, in this example, is one hour; to that end, the computing system (10) receives signals from an energy meter of the facility (20) indicating the units of energy generated during the period.

Lastly, the computing system (10) transmits the ESG certification value through the Internet to a computer network on which a specific blockchain (30) is implemented for recording ESG certification values, such that the ESG certification value of the facility (20) is added (130) to the blockchain (30), thereby being recorded in a verifiable manner and without any possibility of modification.

Figure 2 schematically shows the power generation facility (20) of the example operatively connected with the computing system (10) which is in turn operatively connected with a computer network comprising the blockchain (30) in which information which allows establishing the ESG certification value of the power generation facility (20) is recorded.

## Claims

1. A method implemented by a computing system (10) for establishing an ESG certification value of a power generation facility (20), wherein the ESG certification value is based on key performance indicators, KPIs, associated with the fulfillment of environmental, social, and corporate governance, ESG, commitment goals by the power generation facility (20); wherein the computing system (10) is in communication with a computer network comprising a blockchain (30); and wherein the method comprises, by the computing system (10), the steps of:
receiving (110) key performance indicators of the power generation facility (20),
calculating (120) the ESG certification value based on a weighted sum of key performance indicators,
adding (130) the ESG certification value to a blockchain (30) of the computer network.

2. The method according to the preceding claim, wherein the key performance indicators of the power generation facility (20) are based on one or more of the following factors: content of fluorinated elements in solar panels, percentage of recycled steel used in construction, percentage of recycled aluminum used in construction, CO₂ emissions generated by material transport, consumption of water used for cleaning solar panels, percentage of the surface of the power generation facility which has been reforested, percentage of energy originating from renewable sources consumed in the power generation facility, percentage of recovered waste.

3. The method according to any of the preceding claims, wherein the step of calculating (120) the ESG certification value comprises applying a weighing function for the amount of power generated by the power generation facility (20) within a time interval.

4. The method according to the preceding claim, wherein the time interval is one hour.

5. The method according to any of the preceding claims, wherein the power generation facility (20) is a photovoltaic plant.

6. The method according to any of claims 1-5, wherein the power generation facility (20) is a hydroelectric power station, a wind farm, a geothermal power station, or a solar thermal power station.

7. The method according to any of the preceding claims, wherein the step of receiving (110) key performance indicators further comprises receiving data relating to the design of the power generation facility (20).

8. The method according to any of the preceding claims, wherein the computing system (10) receives information relating to the key performance indicators and/or data relating to the design of the power generation facility (20) from one or a combination of: a user terminal, a server, one or more sensors of the power generation facility (20).

9. A computing system (10) configured for executing the method according to any of the preceding claims.
